# EUROPÄISCHE PATENTSCHRIFT

(11) **EP 2 697 523 B1**
(45) Veröffentlichungstag und Bekanntmachung des Hinweises auf die Patenterteilung: **25.05.2016**
(21) Anmeldenummer: 12714626.4
(22) Anmeldetag: 30.03.2012
(51) Int. Cl.: F16B 37/04, F16B 13/00, F16B 37/00

(54) **EINSTECKMUTTER**
PLUG-IN NUT
ÉCROU ENFICHABLE

(30) Priorität: 15.04.2011 DE 102011017154; 06.07.2011 DE 202011102954 U
(43) Veröffentlichungstag der Anmeldung: 19.02.2014
(73) Patentinhaber: A. RAYMOND et Cie, 38000 Grenoble (FR)
(72) Erfinder: TREMMEL, Günter, 79540 Lörrach (DE); HAUSER, Ingo, 79400 Kandern (DE); KOLB, Christian, 79589 Binzen (DE); REGENSBURGER, Jan, 79400 Kandern (DE)
(74) Vertreter: RACKETTE Patentanwälte PartG mbB
(86) Internationale Anmeldenummer: PCT/EP2012/055893
(87) Internationale Veröffentlichungsnummer: WO 2012/139909

(56) Entgegenhaltungen:
- WO-A1-87/01419
- WO-A1-2009/109268
- WO-A1-2011/043355
- DE-A1- 19 930 728
- DE-A1-102009 030 040
- US-A- 2 404 169
- US-A- 3 877 342
- US-B1- 6 322 305

## Beschreibung

Die Erfindung betrifft eine Einsteckmutter gemäß dem Oberbegriff des Anspruches 1.

Eine derartige Einsteckmutter ist aus WO 87/01419 A bekannt. Diese vorbekannte Einsteckmutter verfügt über einen Außenkörper und über einen über einen Verschiebeweg verschiebbar in dem Außenkörper gelagerten Innenkörper. Der Innenkörper weist einen Schraubenaufnahmeraum auf, in den eine Schraube einschraubbar ist, und ist mit radial nach außen über den Außenkörper überstehenden Hinterrastnasen ausgebildet, die in einer Endmontageanordnung in den Aufnahmenuten des Außenkörpers angeordnet sind. Der Innenkörper ist drehfest in dem Außenkörper gelagert. Jede Hinterrastnase ist an einem in radialer Richtung federnden Federarm angeformt sowie über den gesamten Verschiebeweg in einer zugeordneten Führungsnut angeordnet. Der Innenkörper ist in dem Außenkörper frei verschiebbar.

Eine weitere Einsteckmutter ist aus DE 10 2005 032 699 A1 bekannt. Diese vorbekannte Einsteckmutter verfügt über einen Außenkörper, der mit einem Auflageteller und Aufnahmenuten ausgebildet ist. Weiterhin ist ein Innenkörper vorhanden, der in dem Außenkörper über einen Verschiebeweg verschiebbar gelagert ist. Der Innenkörper ist mit einem Schraubenaufnahmeraum ausgebildet, in den eine Schraube einschraubbar ist, und weist radial nach außen über den Außenkörper überstehende Hinterrastnasen auf, die in einer Endmontageanordnung nach Drehen des Innenkörpers in Bezug auf den Außenkörper ausgehend von einer Vormontageanordnung in den Aufnahmenuten des Außenkörpers angeordnet sind. In der Vormontagestellung ist der Innenkörper in Bezug auf den Außenkörper so gedreht, dass die Hinterrastnasen mit einem Sockelabschnitt des Außenkörpers fluchten, um ein Einfügen der vorbekannten Einsteckmutter in eine in einem Trägerteil ausgebildete Aufnahmeausnehmung zu gestatten. Durch die axiale Verschiebbarkeit des Innenkörpers in Bezug auf den Außenkörper lassen sich Toleranzen ausgleichen.

Der Erfindung liegt die Aufgabe zugrunde, eine Einsteckmutter der eingangs genannten Art anzugeben, die sich durch einen verhältnismäßig einfachen, stabilen und in der Massenapplikation handhabungssicheren Aufbau auszeichnet.

Diese Aufgabe wird bei einer Einsteckmutter der eingangs genannten Art erfindungsgemäß mit den kennzeichnenden Merkmalen des Anspruches 1 gelöst.

Dadurch, dass Eingriffsmittel vorhanden sind, die in einer Endlage des Innenkörpers den Innenkörper mit einer Vormontagekraft fixieren, lässt sich die Einsteckmutter bis zu einer Vormontagekraft, die größer als die durch das zwangsweise Einfedern der Federarme ausgeübten gegengerichteten Kraft ist, zuverlässig ohne ein unbeabsichtigtes Verschieben des Innenkörpers in Bezug auf den Außenkörper vormontieren, bevor eine Schraube eingeschraubt wird.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen mit Bezug auf die Figuren der Zeichnung.

Es zeigen:
- Fig. 1: in einer perspektivischen Ansicht ein Ausführungsbeispiel einer Einsteckmutter gemäß der Erfindung mit einem Außenkörper und mit einem Innenkörper, der abschnittsweise in den Außenkörper eingeschoben ist,
- Fig. 2: in einem Längsschnitt das Ausführungsbeispiel gemäß Fig. 1 mit einem bis in eine Endlage in den Außenkörper eingeschobenen Innenkörper,
- Fig. 3: in einem Längsschnitt das Ausführungsbeispiel gemäß Fig. 1 in einer Endmontageanordnung, in der ein Anbauteil an einem Trägerteil befestigt ist,
- Fig. 4: in einer teilgeschnittenen perspektivischen Ansicht ein weiteres Ausführungsbeispiel einer Einsteckmutter gemäß der Erfindung, das über eine Dichtkappe verfügt,
- Fig. 5: in einem Längsschnitt das weitere Ausführungsbeispiel gemäß Fig. 4 in einer Endmontageanordnung mit einer verpressten Dichtkappe,
- Fig. 6: in einer perspektivischen Ansicht ein weiteres Ausführungsbeispiel einer Einsteckmutter gemäß der Erfindung mit einem Außenkörper und mit einem Innenkörper, der bis in eine Endlage in den Außenkörper eingeschoben ist,
- Fig. 7: in einem Längsschnitt das weitere Ausführungsbeispiel gemäß Fig. 6 mit dem in der Endlage angeordneten Innenkörper und
- Fig. 8: in einem Längsschnitt das weitere Ausführungsbeispiel gemäß Fig. 6 mit einem bis in eine Demontagelage in den Außenkörper eingeschobenen Innenkörper.

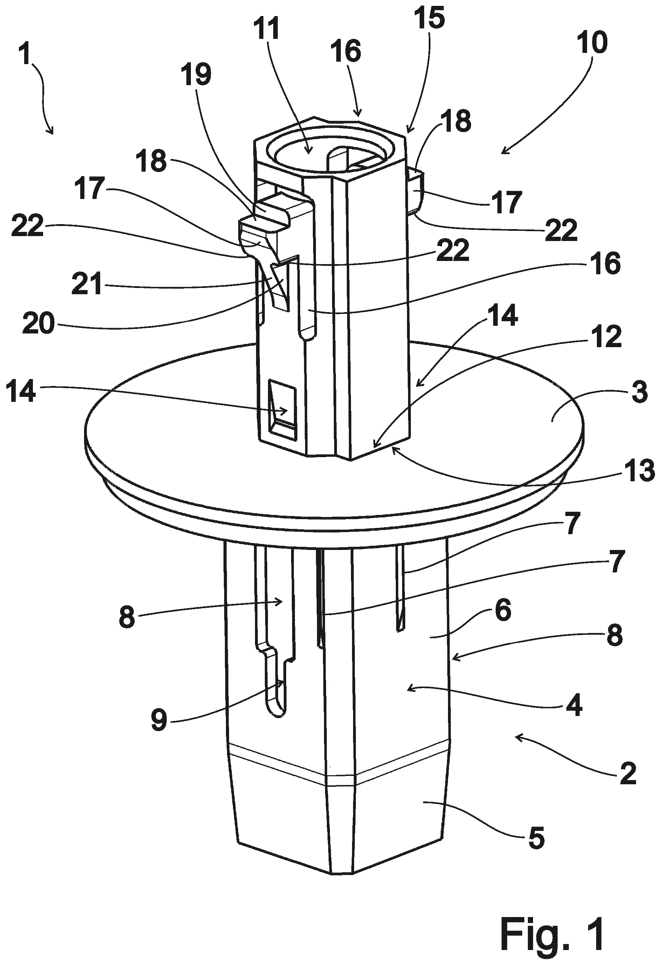

Fig. 1 zeigt in einer perspektivischen Ansicht ein aus einem hartelastischen Kunststoffmaterial hergestelltes Ausführungsbeispiel einer Einsteckmutter 1 gemäß der Erfindung. Die Einsteckmutter 1 verfügt über einen Außenkörper 2, der einen Auflageteller 3 und einen mit dem Auflageteller 3 verbundenen länglichen Fußschaft 4 aufweist, der im Wesentlichen rechtwinklig zu dem radial über den Fußschaft 4 auskragenden Auflageteller 3 ausgerichtet ist. Der Fußschaft 4 ist bei diesem Ausführungsbeispiel mit einem im Wesentlichen quadratischen äußeren Querschnitt ausgebildet und in einem dem Auflageteller 3 abgewandten Fußabschnitt 5 verjüngt. Ein zwischen dem Auflageteller 3 und dem Fußabschnitt 5 liegender Mittenabschnitt 6 weist in Längsrichtung einen gleichbleibenden Querschnitt auf und ist in seinem dem Auflageteller 3 zugewandten Bereich mit geringfügig über die Außenwand des Außenkörpers 2 vorstehenden, sich in Längsrichtung erstreckenden Ausgleichsrippen 7 ausgebildet. In zwei einander gegenüber liegenden Wänden des Mittenabschnittes 6 sind sich in Längsrichtung erstreckende längliche Aufnahmenuten 8 eingebracht, die in ihren dem Fußabschnitt 5 zugewandten Endabschnitten 9 gegenüber der übrigen Breite verjüngt sind.

Weiterhin ist die Einsteckmutter 1 mit einem länglichen Innenkörper 10 ausgestattet, der einen von einer Kreisform abweichenden, hier mit winklig zueinander ausgerichteten flachen Seitenflächen ausgebildeten Querschnitt aufweist. Der Innenkörper 10 ist mit einem sich in Längsrichtung erstreckenden Schraubenaufnahmeraum 11 versehen. In der Darstellung gemäß Fig. 1 ist der Innenkörper 10 mit einem glattwandigen Randabschnitt 12 in eine in den Auflageteller 3 eingebrachte Aufnahmeausnehmung 13 eingesteckt, die einen zu dem Querschnitt des Innenkörpers 10 komplementären formschlüssigen Querschnitt aufweist. Im Bereich des Randabschnittes 12 ist der Innenkörper 10 mit wenigstens einer, vorzugsweise jedoch mit zwei einander gegenüber liegenden Fixiervertiefungen 14 ausgebildet.

Auf der dem Randabschnitt 12 abgewandten Seite der Fixiervertiefungen 14 sind in einem Kopfabschnitt 15 des Innenkörpers 10 freigeschnittene Federarme 16 vorhanden, die in radialer Richtung biegsam sind und an ihren dem Kopfabschnitt 15 zugewandten freien Enden jeweils eine Hinterrastnase 17 tragen. Die Hinterrastnasen 17 stehen in relaxierter Anordnung radial nach außen über die Außenwand des Innenkörpers 10 sowie über den Mittenabschnitt 6 des Außenkörpers 2 über und weisen jeweils eine dem Randabschnitt 12 abgewandte und damit dem Kopfabschnitt 15 zugewandte Axialanschlagfläche 18 und eine rechtwinklig zu der Axialanschlagfläche 18 ausgerichtete Radialanschlagfläche 19 auf. Auf der der Axialanschlagfläche 18 abgewandten Seite ist an jeden Federarm 16 und an jeder Hinterrastnase 17 eine gegenüber der Hinterrastnase 17 schmalere Keilrippe 20 angeformt, die sich ausgehend von einem einer Fixiervertiefung gegenüber liegenden Ende in Längsrichtung mit zunehmendem radialem Abstand von dem jeweiligen Federarm 16 in Richtung der betreffenden Hinterrastnase 17 eine erstreckt und eine bündig mit der Hinterrastnase 17 liegende Aufgleitfläche 21 aufweist. Beidseitig der Keilrippen 20 weist jede Hinterrastnase 17 der jeweiligen Axialanschlagfläche 18 gegenüber liegende Begrenzungsflächen 22 auf.

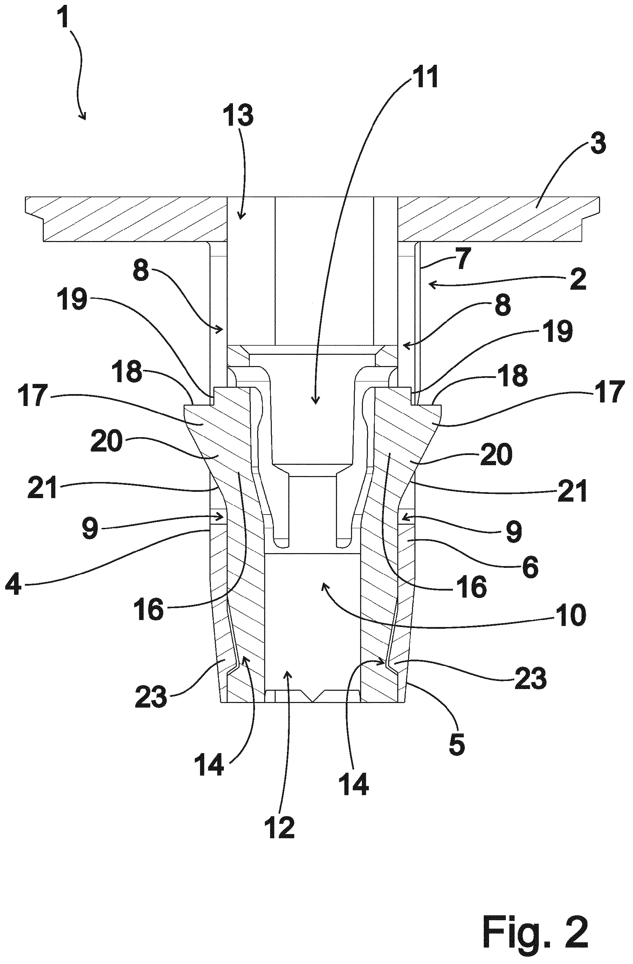

Fig. 2 zeigt das Ausführungsbeispiel gemäß Fig. 1 in einem Längsschnitt mit einem bis in eine Endlage vollständig in den Außenkörper 2 eingeschobenen Innenkörper 10. Aus der Darstellung gemäß Fig. 2 ist ersichtlich, dass in der Endlage in die Fixiervertiefungen 14 des Innenkörpers 10 in dem Fußabschnitt 5 des Außenkörpers 2 ausgebildete Fixiervorsprünge 23 eingreifen, die zusammen mit den Fixiervertiefungen 14 Eingriffsmittel bilden, um den Innenkörper 10 bis zu einer gegenüber der Auszugskraft der Einsteckmutter geringeren Vormontagekraft in dem Außenkörper 2 zu fixieren. Weiterhin lässt sich Fig. 2 entnehmen, dass in der gegenüber der Anordnung gemäß Fig. 1 weiter in den Außenkörper 2 eingeschobenen Anordnung des Innenkörpers 10 die Hinterrastnasen 17 nunmehr in den Aufnahmenuten 8 angeordnet sind, wobei zum Einnehmen der Anordnung gemäß Fig. 2 die Hinterrastnasen 17 aufgrund der Flexibilität der Federarme 16 bei Passieren der Aufnahmeausnehmung 13 im Bereich des Auflagetellers 3 radial nach innen mit Aufgleiten der Aufgleitflächen 21 an dem Rand der Aufnahmeausnehmung 13 eingefedert worden sind. In der Anordnung gemäß Fig. 2 tauchen die Keilrippen 20 in die Endabschnitte 9 der Aufnahmenuten 8 ein, wobei die Begrenzungsflächen 22 an im Bereich der Endabschnitte 9 ausgebildeten Stufen der Aufnahmenuten 8 anschlagen und ein weiteres Einschieben des Innenkörpers 10 in den Außenkörper 2 blockieren.

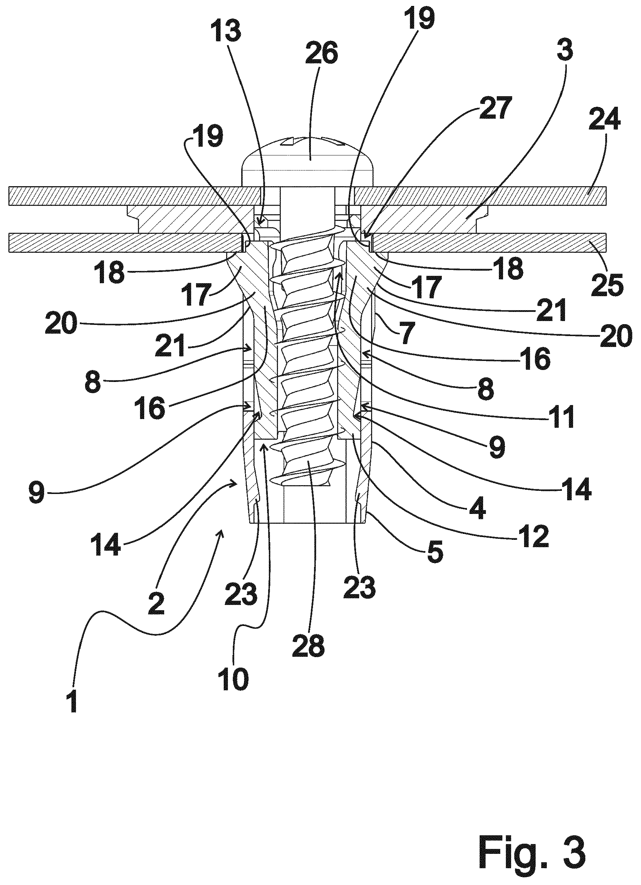

Fig. 3 zeigt in einem Längsschnitt das Ausführungsbeispiel gemäß Fig. 1 in einer Endmontageanordnung beim Befestigen eines Anbauteiles 24 an einem Trägerteil 25 mittels einer Schraube 26. Zum Einnehmen der Endmontageanordnung gemäß Fig. 3 wurde die Einsteckmutter 1 in eine in dem Trägerteil 25 ausgebildete Befestigungsausnehmung 27 eingefügt, wobei wie beim Einnehmen der Endlage gemäß den Erläuterungen zu Fig. 2 während des Einfügevorganges die Federarme 16 soweit radial nach innen eingefedert sind, dass die Hinterrastnasen 17 unter Aufgleiten des Randes der Befestigungsausnehmung 27 an den Aufgleitflächen 21 der Keilrippen 20 vollständig in die Aufnahmenuten 8 versenkt worden sind. Durch den Eingriff der Fixiervertiefungen 14 und der Fixiervorsprünge 23 verbleibt während des Einfügevorganges der Einsteckmutter 1 bis zu einer Vormontagekraft, die größer als die durch das zwangsweise Einfedern der Federarme 16 ausgeübten gegengerichteten Kraft ist, der Innenkörper 10 in der vollständig in den Außenkörper 2 eingetauchten Anordnung gemäß Fig. 2.

Nach Anschlag des Auflagetellers 3 an dem Trägerteil 25 wurde das Anbauteil 24 auf die dem Trägerteil 25 abgewandte Seite des Auflagetellers 3 auf den Auflageteller 3 aufgelegt und die Schraube 26 durch die Aufnahmeausnehmung 13 hindurch in den Außenkörper 2 bis zum abschnittsweisen Eintauchen des Endes eines Schraubenschaftes 28 der Schraube 26 in den Schraubenaufnahmeraum 11 des Innenkörpers 10 eingeschoben. Nach Drehen der Schraube 26 mit einem in Fig. 3 nicht dargestellten Werkzeug kommt ein Gewinde des Schraubenschaftes 28 mit der Innenwand des Innenkörpers 10 in Eingriff und löst den Eingriff zwischen den Fixiervertiefungen 14 sowie den Fixiervorsprüngen 23.

Bei Fortsetzen des Einschraubvorganges bewegt sich der Innenkörper 10 aufgrund seiner verschiebbaren Lagerung in dem Außenkörper 2 über einen Verschiebeweg bis zum Anschlag der Axialanschlagflächen 18 der Hinterrastnasen 17 an die dem Auflageteller 3 abgewandte Seite des Trägerteiles 25. In dieser Anordnung sind die Federarme 16 durch den Schraubenschaft 28 gegen Einfedern nach innen blockiert, wobei die Radialanschlagflächen 19 ein Bewegen der Federarme 16 radial nach außen durch Anschlag an die Innenseite der Befestigungsausnehmung 27 verhindern. Dadurch ist mit einer sehr hohen Auszugskraft ein sicherer Halt der Einsteckmutter 1 gewährleistet.

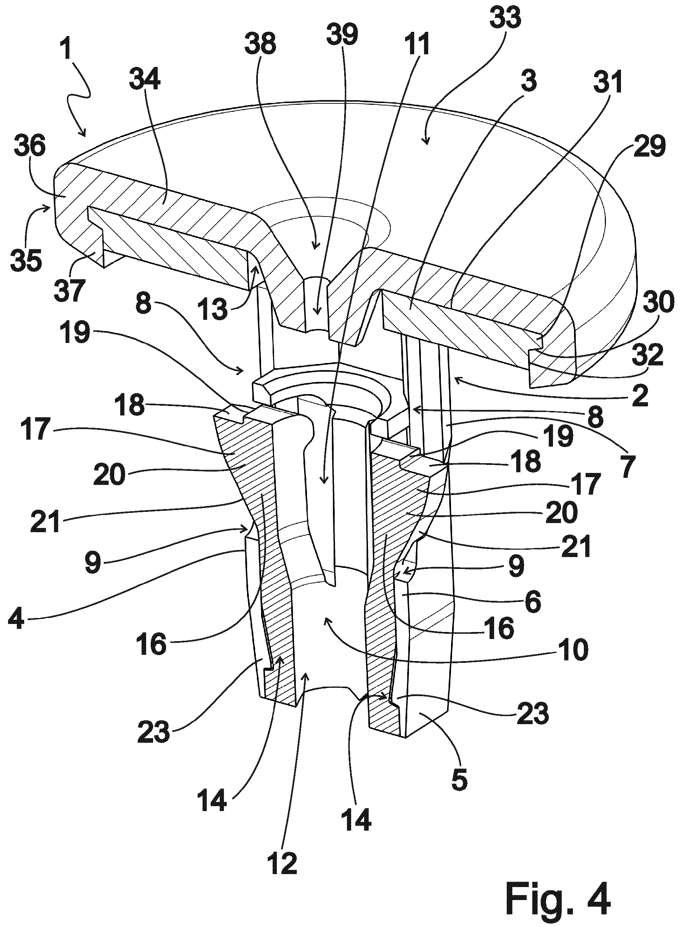

Fig. 4 zeigt in einer teilgeschnittenen Ansicht ein weiteres Ausführungsbeispiel einer erfindungsgemäßen Einsteckmutter, das einen Außenkörper 2 und einen Innenkörper 10 aufweist, die entsprechend dem anhand Fig. 1 bis Fig. 3 erläuterten Ausführungsbeispiel aufgebaut und ausgestaltet sind. Dementsprechend sind sich bei dem Ausführungsbeispiel gemäß Fig. 1 bis Fig. 3 und bei dem Ausführungsbeispiel gemäß Fig. 4 einander entsprechende Elemente mit den gleichen Bezugszeichen versehen und zum Vermeiden von Wiederholungen zum Teil nicht näher erläutert. Bei dem weiteren Ausführungsbeispiel gemäß Fig. 4 ist der Auflageteller 3 an seiner Randseite mit einem radial nach außen vorstehenden Tellerkragen 29 ausgebildet, der auf seiner dem Fußschaft 4 des Außenkörpers 2 zugewandten Seite mit einer Abschrägung 30 ausgebildet ist, die von der radialen Außenseite des Tellerkragens 29 schräg in Richtung des Fußschaftes 4 ansteigend und damit von einer Deckseite 31 des Auflagetellers 3 weg weisend verläuft. An dem radial innen liegenden Ende der Abschrägung 30 verfügt der Auflageteller 3 über eine parallel zur Längsrichtung des Fußschaftes 4 ausgerichtete Ringfläche 32.

Das weitere Ausführungsbeispiel gemäß Fig. 4 ist weiterhin mit einer Deckkappe 33 aus einem weichelastischen Kunststoffmaterial ausgestattet, die vorzugsweise als separates Bauteil hergestellt und in einem Zusammenbauschritt auf den Auflageteller 3, wie in Fig. 4 dargestellt, aufgebracht ist. Die Deckkappe 33 verfügt über eine Deckplatte 34, deren Grundfläche der Grundfläche des Auflagetellers 3 entspricht. An der radialen Außenseite der Deckplatte 34 ist die Deckkappe 33 mit einer Einkragung 35 ausgebildet, die einen den Tellerkragen 29 radial außenseitig umgebenden Randabschnitt 36 und einen sich von dem von der Deckplatte 34 abgewandten Ende des Randabschnittes 36 radial nach innen erstreckenden Innenabschnitt 37 aufweist. Der Abstand zwischen der Deckplatte 34 und dem Innenabschnitt 37 ist so eingerichtet, dass, wie in Fig. 4 deutlich erkennbar ist, der Tellerkragen 29 des Auflagetellers 3 formschlüssig eingefügt ist. Dadurch liegt die der Deckplatte 34 zugewandte Innenseite des Innenabschnittes 37 an der Abschrägung 30 an. Die Dimension des Innenabschnittes 37 in radialer Richtung ist so eingerichtet, dass das radial nach innen weisende Ende des Innenabschnittes 37 an der Ringfläche 32 des Auflagetellers 3 anliegt. Somit umschließt die Deckkappe 33 den Auflageteller 3 auf seiner dem Fußschaft 4 abgewandten Seite sowie im Bereich der radialen Außenseite. Weiterhin lässt sich der Darstellung gemäß Fig. 4 entnehmen, dass in der in Fig. 4 dargestellten relaxierten Anordnung der Deckkappe 33 der Innenabschnitt 37 in Richtung des Fußschaftes 4 in axialer Richtung über den Auflageteller 3 übersteht.

Bei dem Ausführungsbeispiel gemäß Fig. 4 ist die Deckplatte 34 mit einer mittigen Vertiefung 38 ausgebildet, die in die Aufnahmeausnehmung 13 hineinragt. Bei dem in Fig. 4 dargestellten weiteren Ausführungsbeispiel ist die Vertiefung 38 mit einer Freimachung 39 ausgebildet, deren Durchmesser in etwa dem halben Nenndurchmesser eines Schraubenschaftes 28 einer mit der Einsteckmutter 1 zu verwendenden Schraube 26 dimensioniert ist.

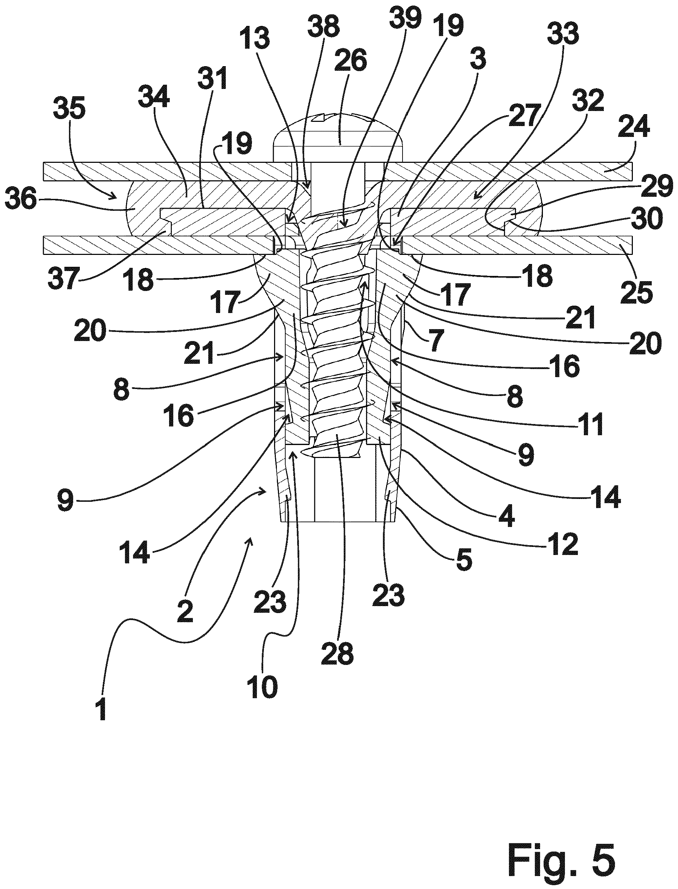

Fig. 5 zeigt in einem Längsschnitt das weitere Ausführungsbeispiel gemäß Fig. 4 in einer Endmontageanordnung, in der die Deckkappe 33 insbesondere mit ihrem Innenabschnitt 37 zwischen einem Anbauteil 24 und einem Trägerteil 25 durch Anziehen einer Schraube 26 unter Andrücken des Innenkörpers 10 gegen das Trägerteil 25 entsprechend den Erläuterungen von Fig. 3 zu dem Ausführungsbeispiel gemäß Fig. 1 verpresst ist. Durch die Verpressung der Deckkappe 33 sowie durch das Umschließen des Schraubenschaftes 28 im Bereich der Vertiefung 38 ist eine außerordentlich hohe Dichtigkeit insbesondere gegen Wasser oder andere flüssige Materialien erzielt.

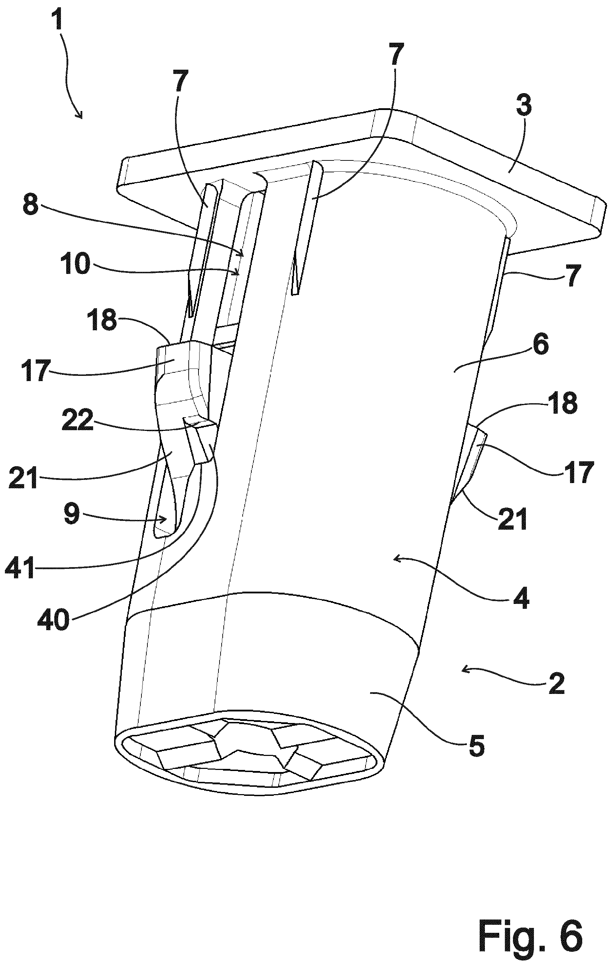

Fig. 6 zeigt in einer perspektivischen Ansicht ein weiteres Ausführungsbeispiel einer Einsteckmutter 1 gemäß der Erfindung, wobei nachfolgend sich bei dem Ausführungsbeispiel gemäß Fig. 1 und bei dem Ausführungsbeispiel gemäß Fig. 6 einander entsprechende Elemente mit den gleichen Bezugszeichen versehen und zum Vermeiden von Wiederholungen zum Teil nicht nochmals näher erläutert sind. Der Fußschaft 4 des Ausführungsbeispieles gemäß Fig. 6 ist ovalartig ausgebildet. Weiterhin lässt sich Fig. 6 entnehmen, dass bei dem Ausführungsbeispiel gemäß Fig. 6 die Hinterrastnasen 17 in radialer Richtung gegenüber den Aufgleitflächen 21 versetzt jeweils eine Schrägfläche 40 aufweisen, die sich von der jeweiligen Begrenzungsfläche 22 weg nach radial innen erstrecken. In sowohl axialer als auch in radialer Richtung den Schrägflächen 40 gegenüber liegend verfügt der Außenkörper 2 im Bereich der dem Auflageteller 3 zugewandten Enden der Endabschnitte 9 der Aufnahmenuten 8 über eine sich in Umfangsrichtung erstreckende Aufgleitkante 41.

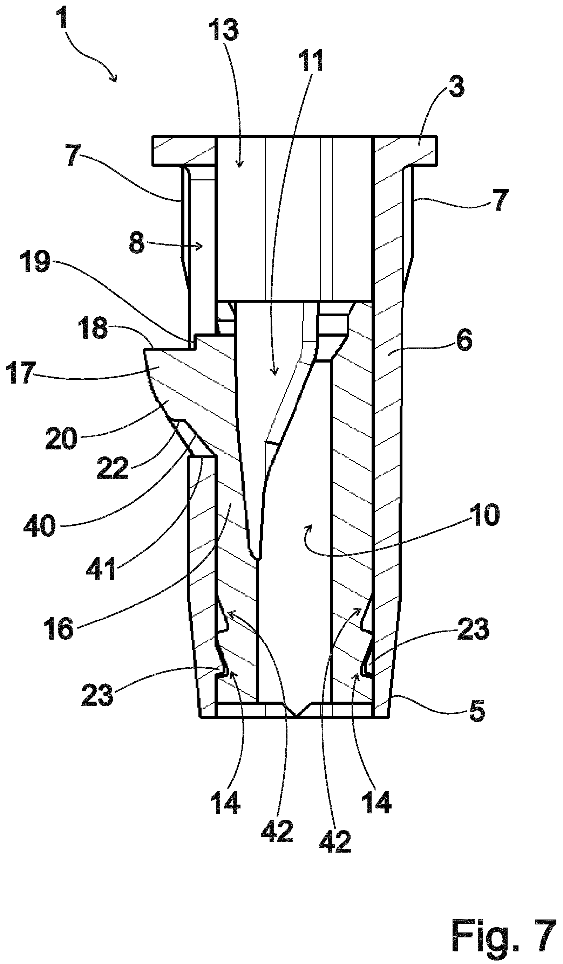

Fig. 7 zeigt in einem Längsschnitt das Ausführungsbeispiel gemäß Fig. 6 mit dem Innenkörper 10 in der Endlage. Aus Fig. 7 ist ersichtlich, dass in der Endlage die Aufgleitkante 41 jeder Hinterrastnase 17 an dem der Begrenzungsfläche 22 abgewandten Ende der Schrägfläche 40 an dem Innenkörper 10 anliegt, wobei die Hinterrastnasen 17 jedoch maximal nach radial außen überstehen. Weiterhin lässt sich der Darstellung gemäß Fig. 7 entnehmen, dass der Innenkörper 10 auf der den Rastnasen 17 zugewandten Seite der Fixiervertiefungen 14 über Arretiervertiefungen 42 verfügt, die eine zu den Fixiervorsprüngen 23 komplementäre Gestalt aufweisen.

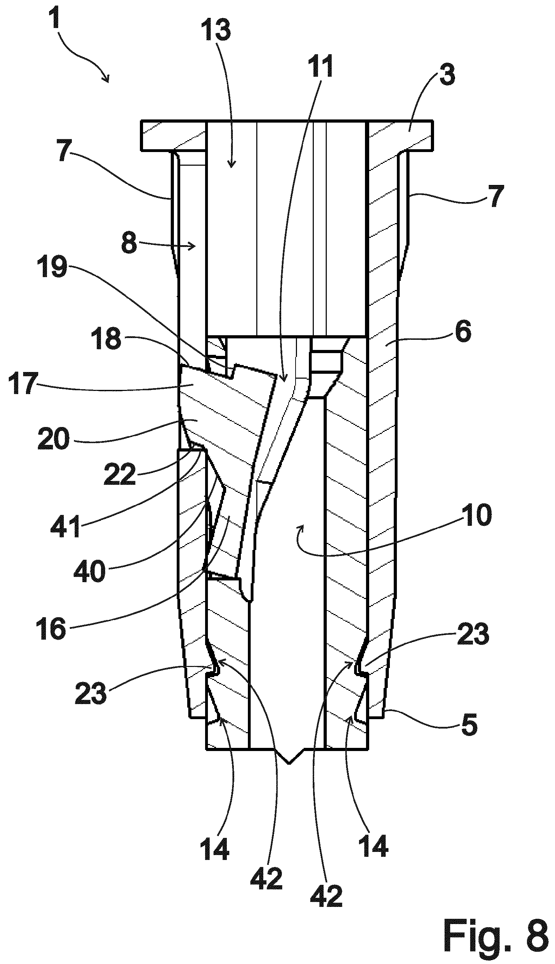

Fig. 8 zeigt in einem Längsschnitt das weitere Ausführungsbeispiel gemäß Fig. 6 mit dem in axialer Richtung der Einsteckmutter 1 über die Endlage gemäß Fig. 7 hinaus bis zum Eingriff der Arretiervertiefungen 42 mit den Fixiervorsprüngen 23 in den Außenkörper 2 eingeschobenen Innenkörper 10. Beim Überführen des Innenkörpers 10 von der Endlage gemäß Fig. 7 in die Arretierlage gemäß Fig. 8 gleiten die Schrägflächen 40 nach Überwinden eines gewissen Widerstandes an den Aufgleitkanten 41 auf. Die Begrenzungsflächen 22 bilden für diese Bewegung einen Anschlag. In der Arretierlage ist somit der Innenkörper 10 mit radial nach innen eingefederten Hinterrastnasen 17 fixiert, so dass die Einsteckmutter 1 demontierbar ist.

## Patentansprüche

1. Einsteckmutter mit einem einen Auflageteller (3) sowie Aufnahmenuten (8) aufweisenden Außenkörper (2) und mit einem über einen Verschiebeweg verschiebbar in dem Außenkörper (2) gelagerten Innenkörper (10), der einen Schraubenaufnahmeraum (11) aufweist, in den eine Schraube (26) einschraubbar ist, und der mit radial nach außen über den Außenkörper (2) überstehenden Hinterrastnasen (17) ausgebildet ist, die in einer Endmontageanordnung in den Aufnahmenuten (8) des Außenkörpers (2) angeordnet sind, wobei der Innenkörper (10) drehfest in dem Außenkörper (2) gelagert ist und wobei jede Hinterrastnase (17) an einem in radialer Richtung federnden Federarm (16) angeformt sowie über den gesamten Verschiebeweg in einer zugeordneten Führungsnut (8) angeordnet ist, **dadurch gekennzeichnet, dass** der Außenkörper (2) und der Innenkörper (10) in einer maximal in den Außenkörper (2) eingeschobenen Endlage des Innenkörpers (10) miteinander zusammenwirkende Eingriffsmittel (14, 23) aufweisen, die den Innenkörper (10) mit einer Vormontagekraft fixieren.

2. Einsteckmutter nach Anspruch 1, **dadurch gekennzeichnet, dass** die Eingriffsmittel Fixiervertiefungen (14) und bei Zusammenwirken in die Fixiervertiefungen (14) eingreifende Fixiervorsprünge (23) aufweisen.

3. Einsteckmutter nach Anspruch 1 oder Anspruch 2, **dadurch gekennzeichnet, dass** jede Hinterrastnase (17) mit einer Aufgleitkante (41) und der Außenkörper (2) mit jeweils einer einer Aufgleitkante (41) zugeordneten Arretiervertiefung (42) ausgebildet ist, die in einer Arretierlage des Innenkörpers (10) in Bezug auf den Außenkörper (2) ein Einfedern der Hinterrastnasen (17) nach radial innen bewirken.

4. Einsteckmutter nach einem der Ansprüche 1 bis 3, **dadurch gekennzeichnet, dass** jede Hinterrastnase (17) eine radial nach außen weisende Radialanschlagfläche (19) aufweist.

5. Einsteckmutter nach einem der Ansprüche 1 bis 4, **dadurch gekennzeichnet, dass** an jede Hinterrastnase (17) eine in Richtung eines Randabschnittes (12) weisende Keilrippe (20) angeformt ist, die in einer maximal in dem Außenkörper (2) eingeschobenen Endlage des Innenkörpers (10) in einem schmalen Endabschnitt (9) der Aufnahmenut (8) angeordnet ist.

6. Einsteckmutter nach einem der Ansprüche 1 bis 5, **dadurch gekennzeichnet, dass** der Außenkörper (2) und der Innenkörper (10) einen von einer Kreisform abweichenden, zueinander formschlüssigen Querschnitt aufweisen.

7. Einsteckmutter nach einem der Ansprüche 1 bis 6, **dadurch gekennzeichnet, dass** an den Außenkörper (2) radial nach außen vorstehende schmale Ausgleichsrippen (7) angeformt sind.

8. Einsteckmutter nach einem der Ansprüche 1 bis 7, **dadurch gekennzeichnet, dass** der Auflageteller (3) auf einer einem Fußschaft (4) abgewandten Flachseite und auf seiner radial außen liegenden Randseite von einer Deckkappe (33) aus einem weichelastischen Material umgeben ist.

9. Einsteckmutter nach Anspruch 8, **dadurch gekennzeichnet, dass** die Deckkappe (33) auf ihrer radialen Außenseite einen radial nach innen einkragenden Innenabschnitt (37) aufweist, der in relaxierter Anordnung der Deckkappe (33) in axialer Richtung über den Auflageteller (3) übersteht.

10. Einsteckmutter nach Anspruch 8 oder Anspruch 9, **dadurch gekennzeichnet, dass** die Deckkappe (33) ein separates, nach Herstellen des Außenkörpers (2) auf den Auflageteller (3) aufbringbares Bauteil ist.

## Claims

1. Plug-in nut having an outer body (2) comprising a support plate (3) and receiving slots (8) and having an inner body (10) which is mounted in the outer body (2), displaceable by means of a displacement path, and which has a screw receiving space (11) into which a screw (26) can be screwed and which is configured with rear-locking catch lugs (17) which project radially outwardly beyond the outer body (2) and which are arranged, in a final mounting arrangement, in the receiving slots (8) of the outer body (2), wherein the inner body (10) is mounted rotationally fixed in the outer body (2) and wherein each rear-locking catch lug (17) is formed on a spring arm (16) which is flexible in the radial direction and is arranged, over the whole displacement path, in an associated guide slot (8) **characterised in that** the outer body (2) and the inner body (10) have engaging means (14, 23) co-operating with one another in a final position of the inner body (10) maximally inserted into the outer body (2), said engaging means fixing the inner body (10) with a pre-mounting force.

2. Plug-in nut according to claim 1, **characterised in that** the engaging means have fixing depressions (14) and fixing projections (23) which engage in the fixing depressions (14) when co-operating.

3. Plug-in nut according to claim 1 or claim 2, **characterised in that** each rear-locking catch lug (17) is configured with a ramp edge (41) and the outer body (2) is configured with a locking recess (42) associated with each ramp edge (41), each locking recess causing radially inward flexing of the rear-locking catch lugs (17) in a locking position of the inner body (10) in relation to the outer body (2).

4. Plug-in nut according to one of the claims 1 to 3, **characterised in that** each rear-locking catch lug (17) has a radially outwardly facing radial stop surface (19).

5. Plug-in nut according to one of the claims 1 to 4, **characterised in that** formed on each rear-locking catch lug (17) is a wedge-shaped rib (20) facing in the direction of an edge portion (12), said wedge-shaped rib being arranged, in an end position of the inner body (10) pushed to the maximum extent in the outer body (2), in a narrow end portion (9) of the receiving slot (8).

6. Plug-in nut according to one of the claims 1 to 5, **characterised in that** the outer body (2) and the inner body (10) have a cross-section deviating from a circular form and interlocking with one another.

7. Plug-in nut according to one of the claims 1 to 6, **characterised in that** radially outwardly projecting narrow compensating ribs (7) are formed on the outer body (2).

8. Plug-in nut according to one of the claims 1 to 7, **characterised in that** the support plate (3) is surrounded on a flat side facing away from a foot shaft (4) and on its radially outwardly positioned edge side by a cover cap (33) made of a soft elastic material.

9. Plug-in nut according to claim 8, **characterised in that** the cover cap (33) has, on its radial outer side, a radially inwardly projecting inner portion (37) which, in the relaxed arrangement of the cover cap (33), projects in the axial direction beyond the support plate (3).

10. Plug-in nut according to claim 8 or claim 9, **characterised in that** the cover cap (33) is a separate component which is mountable on the support plate (3) after manufacturing of the outer body (2).

## Revendications

1. Ecrou à enfoncer comprenant une collerette d'appui (3) ainsi qu'un élément extérieur femelle (2) muni de gorges de réception (8) et comprenant un élément intérieur mâle (10) disposé dans l'élément extérieur femelle (2) avec la possibilité de coulisser dans celui-ci sur une certaine course de déplacement, qui comporte un gabarit de réception d'un filetage (11) dans lequel une vis (26) peut être vissée, et qui est muni d'ergots de cramponnements par derrière (17) qui font saillie vers l'extérieur dans le plan radial hors de la périphérie de l'élément extérieur femelle (2), qui, dans la position de montage final, sont insérés dans les gorges de réception (8) de l'élément extérieur femelle (2), l'élément intérieur mâle (10) étant en l'occurrence immobilisé en rotation dans l'élément extérieur femelle (2) et chaque ergot de cramponnement par derrière (17) étant en l'occurrence réalisé solidaire par moulage d'un segment élastique (16) réagissant élastiquement dans le plan radial et également disposé dans une gorge de réception (8) correspondante sur toute l'étendue de la course de déplacement, **caractérisé en ce que** l'élément extérieur femelle (2) et l'élément intérieur mâle (10) sont munis de moyens de mise en prise d'accrochage (14, 23), qui sont engagés dans une position d'encastrement réciproque lorsque l'élément intérieur mâle (10) est inséré à fond de course dans l'élément extérieur femelle (2), et qui immobilisent l'élément intérieur mâle (10) par la mise en oeuvre une force préalable d'attente de blocage en position.

2. Ecrou à enfoncer selon la revendication 1, **caractérisé en ce que** les moyens de mise en prise d'accrochage sont constitués par des encoches de blocage (14) et par des protubérances de blocage (23) qui viennent s'insérer dans les encoches de blocage (14) lors de leur engagement en prise d'encastrement réciproque.

3. Ecrou à enfoncer selon la revendication 1 ou la revendication 2, **caractérisé en ce que** chaque ergot de cramponnement par derrière (17) comporte une arête de glissement (41) et l'élément extérieur femelle (2) une dépression de blocage en position (42) correspondant respectivement à une arête de glissement (41) qui, dans une position de blocage en position de l'élément intérieur mâle (10) par rapport à l'élément extérieur femelle (2), provoquent un cédage des ergots de cramponnement par derrière (17) vers l'intérieur dans le plan radial par effet d'élasticité.

4. Ecrou à enfoncer selon l'une des revendications 1 à 3, **caractérisé en ce que** chaque ergot de cramponnement par derrière (17) comporte une face de butée radiale (19) s'étendant dans le plan radial vers l'extérieur.

5. Ecrou à enfoncer selon l'une des revendications 1 à 4, **caractérisé en ce qu'**il est prévu, réalisée solidaire par moulage de chaque ergot de cramponnement par derrière (17), une nervure trapézoïdale (20) orientée dans la direction de la portion de rive (12) qui, dans la position d'insertion finale à fond de course de l'élément intérieur mâle (10) dans l'élément extérieur femelle (2), est positionnée dans une étroite portion d'extrémité (9) de la gorge de réception (8).

6. Ecrou à enfoncer selon l'une des revendications 1 à 5, **caractérisé en ce que** l'élément extérieur femelle (2) et l'élément intérieur mâle (10) présentent une section transversale qui diffère de la forme circulaire, assurant entre eux une liaison par l'action mécanique résultant de leur forme.

7. Ecrou à enfoncer selon l'une des revendications 1 à 6, **caractérisé en ce qu'**il est prévu, réalisées solidaires par formage de l'élément extérieur femelle (2), de minces nervures de compensation (7) faisant saillie vers l'extérieur dans le plan radial.

8. Ecrou à enfoncer selon l'une des revendications 1 à 7, **caractérisé en ce que** la collerette d'appui (3), au niveau de sa face plate orientée à l'opposé de la portion d'ancrage en position (4) et au niveau de sa portion de rive s'étendant dans le plan radial vers l'extérieur, est entourée par un couronnement de recouvrement supérieur (33) réalisé dans une matière à cédage élastique facile.

9. Ecrou à enfoncer selon la revendication 8, **caractérisé en ce que** couronnement de recouvrement supérieur (33) comporte, sur son côté extérieur dans le plan radial, une portion intérieure (37) formant encorbellement vers l'intérieur dans le plan radial qui, lorsque le couronnement de recouvrement supérieur (33) se trouve dans sa position non sollicitée, fait saillie dans le plan axial au-dessus de la collerette d'appui (3).

10. Ecrou à enfoncer selon la revendication 8 ou la revendication 9, **caractérisé en ce que** le couronnement de recouvrement supérieur (33) est un composant séparé qui est destiné à être appliqué sur la collerette d'appui (3) postérieurement à la fabrication de l'élément extérieur femelle (2).
